# EUROPÄISCHE PATENTANMELDUNG

(11) **EP 0 728 556 A1**
(43) Veröffentlichungstag der Anmeldung: **28.08.1996**
(21) Anmeldenummer: 96102823.0
(22) Anmeldetag: 26.02.1996
(51) Int. Cl.: B23K 20/10, B29C 65/08

(54) **Ultraschall-Schweissmaschine**

(30) Priorität: 24.02.1995 DE 29503123 U
(71) Anmelder: Sonotronic Nagel GmbH, 76307 Karlsbad (DE)
(72) Erfinder: Stierle, Siegfried, 75438 Knittlingen (DE)
(74) Vertreter: Twelmeier, Ulrich, Dipl.Phys.

(57) **Zusammenfassung**

Ultraschall-Schweißmaschine mit einer Schweißstation (2, 3), in welcher sich ein mit Ultraschall arbeitendes Schweißwerkzeug befindet, mit einer Einlegestation (4), in welcher zu schweißende Gegenstände (a, b) in die Schweißmaschine eingelegt werden, und mit einem beweglichen Tisch (5), auf welchen die Gegenstände in der Einlegestation (4) gelegt und mit welchem sie von der Einlegestation (4) in die Schweißstation (2, 3) überführt und nach dem Schweißvorgang in die Einlegestation (4) überführt werden. Es sind zwei Schweißstationen (2, 3) vorgesehen und die Einlegestation (4) liegt - bezogen auf die Bewegungsbahn des Tisches (5) -zwischen den beiden Schweißstationen (2, 3). Der Tisch (5) hat nebeneinander zwei Aufnahmebereiche (6, 7) und ist mit einem hin- und hergehenden Antrieb ausgerüstet, demzufolge der eine Aufnahmebereich (6) zwischen der Einlegestation (4) und der einen Schweißstation (3) und der andere Aufnahmebereich ( 7) zwischen der Einlegestation (4) und der anderen Schweißstation (2) hin- und herpendelt.

## Beschreibung

Die Erfindung geht aus von einer Ultraschall-Schweißmaschine mit den im Oberbegriff des Anspruchs 1 angegebenen Merkmalen. Eine solche Schweißmaschine ist als Rundschalttellermaschine bekannt und hat einen Drehteller oder Drehtisch, welcher in Drehschritten von jeweils 180° umläuft und dabei fortschreitend eine Einlegestation und eine Schweißstation durchläuft, welche in Bezug auf die Drehbewegung des Tisches in 180°-Lage zueinander angeordnet sind. In der Einlegestation wird ein durch Ultraschallschweißen zu bearbeitender Gegenstand auf den Tisch aufgelegt, durch Drehung des Tisches in die Schweißstation überführt und dort bearbeitet. Gleichzeitig kann in der Einlegestation der nächste zu bearbeitende Gegenstand auf den Tisch aufgelegt werden. Nach Beendigung des Schweißvorganges wird der Tisch weitergedreht und dadurch der verschweißte Gegenstand in die Einlegestation und der zu verschweißende Gegenstand von der Einlegestation in die Schweißstation überführt. In der Einlegestation wird der verschweißte Gegenstand entnommen und ein nächster zu verschweißender Gegenstand auf den Tisch gelegt. Die Einlegestation ist demnach zugleich auch Entnahmestation.

Will man mit Hilfe einer solchen Ultraschall-Schweißmaschine unterschiedliche Gegenstände bearbeiten, dann muss zuvor das Schweißwerkzeug gewechselt werden. Für diesen Zweck werden unterschiedliche Schweißwerkzeuge, sogenannte Wechselsätze, vorrätig gehalten. Der Werkzeugwechsel erfordert Zeit, in welcher die Maschine nicht arbeiten kann. Deshalb versucht man Werkzeugwechsel nach Möglichkeit zu vermeiden und produziert deshalb lieber chargenweise auf Vorrat. Die bekannte Maschine ist insbesondere für Kleinserienfertigungen nicht flexibel genug.

Der vorliegenden Erfindung liegt die Aufgabe zugrunde, einen Weg aufzuzeigen, wie insbesondere für die Kleinserienfertigung von mit Ultraschall zu schweißenden Gegenständen eine flexiblere Arbeitsweise möglich ist.

Diese Aufgabe wird gelöst durch eine Ultraschall-Schweißmaschine mit den im Anspruch 1 angegebenen Merkmalen. Vorteilhafte Weiterbildungen der Erfindung sind Gegenstand der abhängigen Ansprüche.

Die neue Ultraschall-Schweißmaschine hat zur Flexibilisierung der Fertigungsabläufe nicht nur eine, sondern zwei Schweißstationen. Der neue Vorschlag für die Ultraschall-Schweißmaschine erschöpft sich jedoch nicht in einer simplen Verdoppelung der Maschinenteile, was auch nicht sonderlich wirtschaftlich wäre, sondern ersetzt zugleich den aus dem Stand der Technik bekannten, sich fortschreitend drehenden Tisch durch einen hin- und hergehenden Tisch mit zwei Aufnahmebereichen, von denen jeder nur einer der beiden Schweißstationen zugeordnet ist, beide aber abwechselnd in die einzige Einlegestation bewegt werden, in welcher für beide Schweißstationen die zu bearbeitenden Gegenstände eingelegt und auch wieder entnommen werden.

Dieses neue Maschinenkonzept könnte grundsätzlich auch mit einem hin- und hergehenden Drehtisch verwirklicht werden, wobei die beiden Schweißstationen und die Einlegestation bezogen auf die Drehachse des Tisches vorzugsweise in 0°-Lage, 120°-Lage und 240°-Lage angeordnet sind; da der Drehtisch nicht umläuft, sondern hin und hergeht, gelangen der erste, dritte, fünfte, siebte und so weiter Gegenstand in die eine Schweißstation und der zweite, vierte, sechste, achte und so folgende Gegenstand in die andere Schweißstation, und deshalb können vorteilhafterweise in den beiden Schweißstationen unterschiedliche Schweißwerkzeuge für das Schweißen unterschiedlicher Gegenstände vorhanden sein, die von ein und derselben Einlegestation aus beschickt werden. Natürlich ist es auch möglich, in beiden Stationen identische oder spiegelbildlich gleiche Werkzeuge anzuordnen für das Fertigen von identischen oder spiegelbildlich gleichen Gegenständen.

Besonders vorteilhaft ist es aber, anstelle eines hin- und hergehenden Drehtisches einen längs einer geraden Bewegungsbahn hin und her verschiebbaren Tisch vorzusehen, so dass die beiden Schweißstationen und die Einlegestation ebenfalls auf derselben geradlinigen Bewegungsbahn des Tisches liegen. Eine solche Bauweise vereinfacht nicht nur den Aufbau der Maschine (der verschiebbare Tisch kann z.B. einfach mit Hilfe von Druckluftzylindern zwischen zwei Endanschlägen verschoben werden; Druckluft ist praktisch in jedem Produktionsbetrieb vorhanden), sondern erlaubt auch eine rationellere Arbeitsweise dadurch, dass man von beiden Seiten der Bewegungsbahn her an die Einlegestation herankommen kann. Das macht es möglich, die Teile auf der einen Seite der Bewegungsbahn des Tisches zum Einlegen zuzuführen und sie auf der anderen Seite der Bewegungsbahn zu entnehmen und abzulegen oder abzufördern, wobei diese Tätigkeiten nicht nur manuell, sondern auch automatisch mit Hilfe von entsprechenden Einlegevorrichtungen und Entnahmevorrichtungen erfolgen können,wofür reichlich Platz vorhanden ist, wenn beide Seiten der Bewegungsbahn dafür zur Verfügung stehen, was bei einer mit Drehtisch arbeitenden Maschine nicht der Fall ist.

Ein weiterer Vorteil der Erfindung liegt darin, dass bedarfsweise nur in der einen oder anderen Schweißstation gearbeitet wird. In diesem Fall wird eben nur auf eine der beiden Aufnahmebereiche des Tisches ein Gegenstand aufgelegt.

Ein weiterer Vorteil der Erfindung liegt darin, dass in der einen Schweißstation geschweißt werden kann, während in der anderen Schweißstation ein Werkzeug gewechselt werden kann.

Ein weiterer Vorteil der Erfindung liegt schließlich darin, dass zahlreiche Komponenten der Schweißmaschine für beide Schweißstationen, also doppelt genutzt werden können, z.B. der Schiebetisch samt Antrieb, der Schaltschrank mit Stromversorgung, Schaltpult, Steuerung, Bildschirmanzeige und dergleichen mehr.

Die neue Ultraschall-Schweißmaschine ist deshalb insbesondere für das Fertigen kleinerer Serien ein echter Fortschritt hinsichtlich Wirtschaftlichkeit und Flexibilität.
- Figur 1: zeigt eine Ultraschall-Schweißmaschine in einer Schrägansicht, und
- Figure 2: illustriert die Arbeitsweise der Ultraschall-Schweißmaschine aus Figur 1 anhand eines Ablaufschemas.

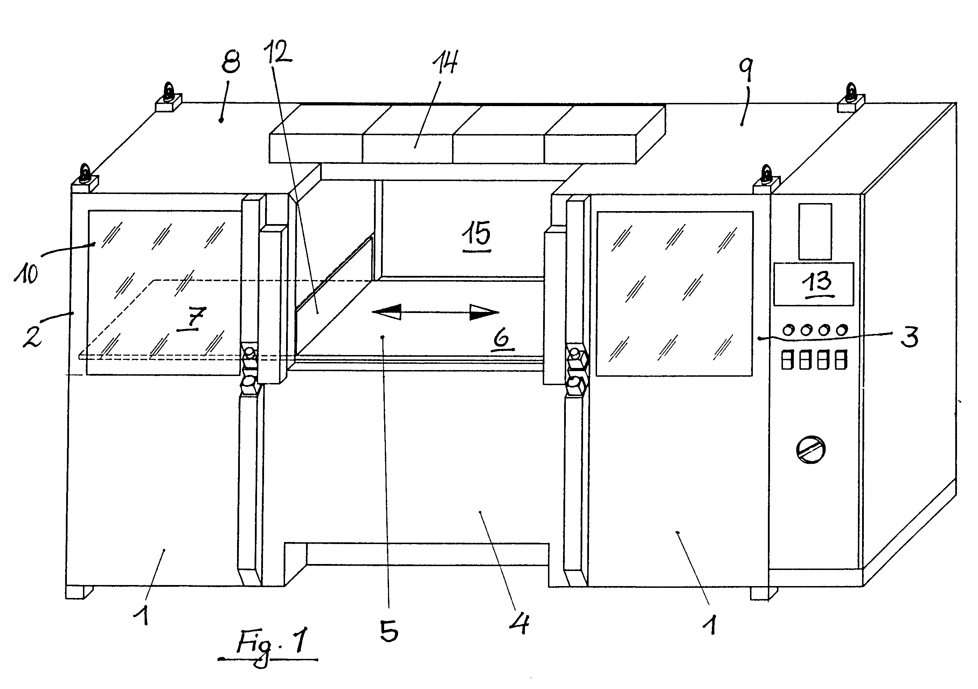

Die Schweißmaschine enthält auf einem Untergestell 1 drei Stationen, nämlich eine linke Schweißstation 2, eine rechte Schweißstation 3 und eine dazwischenliegende Einlegestation 4, von welcher aus beide Schweißstationen 2 und 3 bedient werden können. Dazu ist ein horizontal verschiebbarer Tisch 5 vorgesehen mit zwei Auflegebereichen 6 und 7. Der Tisch ist zwischen zwei Endstellungen hin und her verschiebbar. In der einen, in Figur 1 dargestellten Stellung befindet sich der Auflegebereich 6 in der Einlegestation 4 und der Auflegebereich 7 in der Schweißstation 2. In der anderen Stellung befindet sich der Auflegebereich 6 in der Schweißstation 3 und der Auflegebereich 7 in der Einlegestation 4.

Die beiden Schweißstationen 2 und 3 enthalten jeweils ein Gehäuse 8,9 und ein FensterlO,llundzu beiden Seiten der Einlegestation 4 eine Schleuse 12. In dem Gehäuse 8 9 ist jeweils ein Ultraschall-Schweißwerkzeug montiert, in der Zeichnung aber nicht dargestellt. Die Schweißwerkzeuge werden durch Ultraschall-Generatoren 13 versorgt, welche auf einer die beiden Gehäuse 8 und 9 verbindenden Brücke 14 angeordnet sind. Unterhalb der Brücke 14 befindet sich eine Durchreiche 15; die Einlegestation ist von beiden Seiten der Verschiebebahn des Tisches 5, d.h. von der Vorderseite und von der Rückseite der Maschine her zugänglich. Die Verschiebebahn ist durch zwei Schienen 18 gebildet.

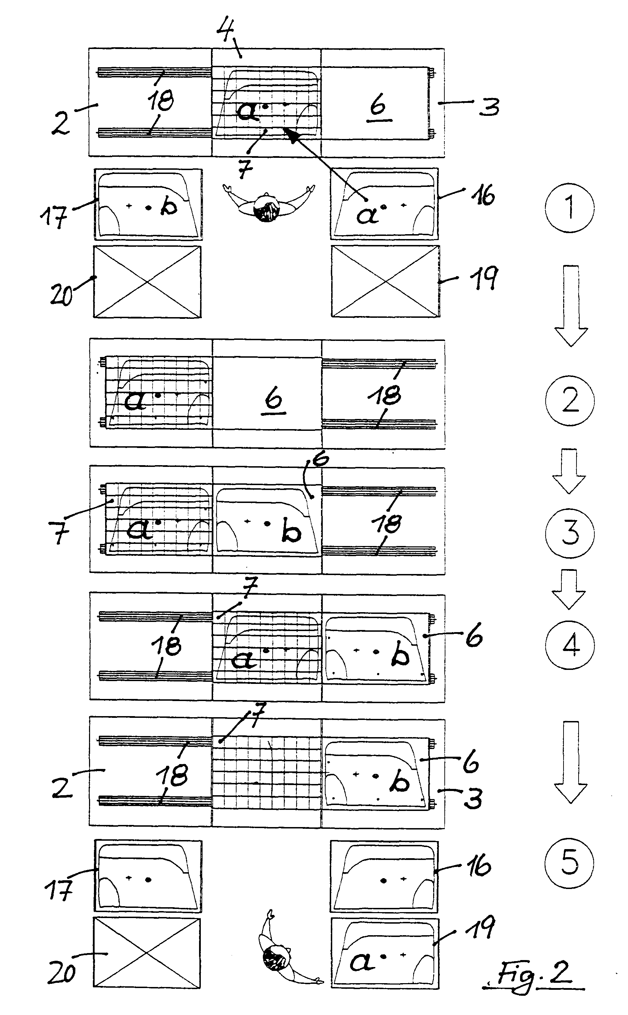

Mit der Ultraschall-Schweißmaschine kann man arbeiten wie in Figur 2 dargestellt:

Vor der Maschine befindet sich zu beiden Seiten der Einlegestation 4 ein Vorrat 16 von zu schweißenden Gegenstände a und ein Vorrat 17 von anderen zu schweißenden Gegenständen b. In der Ausgangsstellung befindet sich der auf Schienen 18 verschiebbare Tisch 5 in seiner rechten Stellung, in welcher der Aufnahmebereich 7 sich in der Einlegestation 4 befindet und frei ist. Auf ihn wird in der ersten Phase ein Gegenstand a gelegt. Der Tisch wird dann in seine linke Stellung verfahren, in welcher der Aufnahmebereich 6 sich in der Einlegestation 4 befindet (zweite Phase). In dieser Stellung wird in einer dritten Phase das Teil a in der linken Schweißstation 2 bearbeitet und gleichzeitig ein anderes Teil b in der Einlegestation 4 auf den Tisch 5 gelegt. In einer vierten Phase wird der Tisch 5 wieder in seine rechte Stellung bewegt, in welcher in einer fünften Phase der Gegenstand b in der Schweißstation 3 bearbeitet und gleichzeitig der fertig bearbeitete Gegenstand a entnommen und in einer Position 19 abgelegt und ein nächster zu bearbeitender Gegenstand a vom Vorrat 16 entnommen und auf den Aufnahmebereich 7 des Tisches gelegt wird, womit der nächste Zyklus beginnt. Wenn der Tisch das nächste Mal in seine linke Stellung fährt, wird der Gegenstand b entnommen und in einer Position 20 abgelegt.

## Patentansprüche

1. Ultraschall-Schweißmaschine
mit einer Schweißstation (2, 3), in welcher sich ein mit Ultraschall arbeitendes Schweißwerkzeug befindet,
mit einer Einlegestation (4), in welcher zu schweißende Gegenstände (a, b) in die Schweißmaschine eingelegt werden,
und mit einem beweglichen Tisch (5), auf welchen die Gegenstände in der Einlegestation (4) gelegt und mit welchem sie von der Einlegestation (4) in die Schweißstation (2, 3) überführt und nach dem Schweißvorgang in die Einlegestation (4) überführt werden,
dadurch gekennzeichnet, dass zwei Schweißstationen (2, 3) vorgesehen sind und die Einlegestation (4) - bezogen auf die Bewegungsbahn des Tisches (5) - zwischen den beiden Schweißstationen (2, 3) liegt,
und dass der Tisch (5) nebeneinander zwei Aufnahmebereiche (6, 7) hat sowie mit einem hin- und hergehenden Antrieb ausgerüstet ist, demzufolge der eine Aufnahmebereich (6) zwischen der Einlegestation (4) und der einen Schweißstation (3) und der andere Aufnahmebereich (7) zwischen der Einlegestation (4) und der anderen Schweißstation (2) hin- und herpendelt.

2. Ultraschall-Schweißmaschine nach Anspruch 1, dadurch gekennzeichnet, dass die Bewegungsbahn des Tisches (5) geradlinig verläuft.

3. Ultraschall-Schweißmaschine nach Anspruch 1 oder 2, dadurch gekennzeichnet, dass die Einlegestation (4) von beiden Seiten der Bewegungsbahn des Tisches (5) her frei zugänglich ist.

4. Ultraschall-Schweißmaschine nach Anspruch 3, dadurch gekennzeichnet, dass neben der Einlegestation (4) auf der einen Seite der Bewegungsbahn des Tisches (5) eine Einlegevorrichtung und auf der anderen Seite der Bewegungsbahn des Tisches (5) eine Entnahmevorrichtung angeordnet ist.

5. Ultraschall-Schweißmaschine nach einem der vorstehenden Ansprüche, dadurch gekennzeichnet, dass sich in den beiden Schweißstationen (2, 3) unterschiedliche Schweißwerkzeuge befinden.
